# EUROPEAN PATENT SPECIFICATION

(11) **EP 0 450 388 B1**
(45) Date of publication and mention of the grant of the patent: **03.01.1996**
(21) Application number: 91104184.6
(22) Date of filing: 18.03.1991
(51) Int. Cl.: G01T 1/164

(54) **Scintillation camera apparatus and method implementing a localized positioning algorithm**
Szintillationskameravorrichtung und Anwendungsverfahren eines Algorithmus zur Positionsbestimmung
Appareil muni de caméra à scintillation et procédé pour appliquer un algorithme de détermination de la position

(30) Priority: 30.03.1990 US 502368
(43) Date of publication of application: 09.10.1991
(73) Proprietor: SIEMENS AKTIENGESELLSCHAFT, D-80333 München (DE)
(72) Inventor: Malmin, Ronald E., Dr., Chicago, IL 60618 (US)

(56) References cited:
- EP-A- 0 240 689
- EP-A- 0 387 800
- DE-A- 3 317 292
- IEEE TRANSACTIONS ON NUCLEAR SCIENCE, vol. NS-31, no. 1, February 1984, New York, US, pp. 274-280 ; P.A. SEEGER : "A Fast Parallel Encoding Scheme For The Anger Camera"
- IEEE TRANSACTIONS ON NUCLEAR SCIENCE, vol. NS-29, no. 4, August 1982, New York, US, pp. 1272-1279 ; G.F. KNOLL et al. : "Computer Correction Of Camera Nonidealities In Gamma Ray Imaging"
- PATENT ABSTRACTS OF JAPAN vol. 9, no. 182 (P-376)(1905) 26 July 1985 & JP-A-60 052 788

## Description

### BACKGROUND OF THE INVENTION

The invention relates to scintillation cameras, and more specifically relates to gamma cameras of the Anger type. In its most immediate sense, the invention relates to linearity correction methods and apparatus.

In a conventional Anger-type scintillation camera such as that disclosed in U.S. Patent No. 3,011,057, the location of a scintillation event in the scintillator crystal is not known precisely, but is approximated by utilizing centroid-type calculations. These calculations are carried out by ganging the outputs of the photomultiplier tubes ("PMTs") through a matrix of resistors. The resistors weight the outputs of the tubes to reflect their X,Y positions with respect to the center of the crystal and the algebraic sum of the thus-weighted outputs represents the assumed X,Y position of the event.

It has long been known that the light from a scintillation event can spread extensively within the crystal before it reaches the PMTs. It has likewise long been known that as a PMT is increasingly remote from an event, the quality of information from that PMT is reduced. Thus, as is disclosed in U.S. Patent No. 3,732,419, threshold preamplifiers are used to prevent utilization, in the centroid calculations, of PMT outputs which are extremely weak. Only if a PMT output exceeds a predetermined threshold is that output permitted to enter the resistor matrix for weighting and contributing to the centroid determination.

It has likewise long been known that the geometry of scintillation cameras is such as to cause most of the scintillation light to be directed to a center tube or tubes. The centroid calculations are consequently affected to an excessive degree by centrally located PMTs. The technique of "masking" is used to correct for this. In accordance with this technique, light-opaque regions, or "masks" are placed between the PMTs and the crystal. These masks cast shadows which, as a function of event location, somewhat reduce the output of the centermost tube or tubes and which therefore make the centroid calculations more accurate.

It is further known from, e.g., U.S. Patent No. 4,386,404 that the geometry of an Anger-type camera introduces nonlinearities into the response of the assembly of PMTs. This nonlinearity is corrected by projecting a pattern of known configuration onto the crystal, using the outputs of the PMTs to reproduce the pattern, and establishing the differences between the pattern as projected and the pattern as reproduced. Correction factors may then be derived from such differences and used to correct the detector output.

It is known from IEEE Transactions on Nuclear Science, Vol. NS-31, No. 1, February 1984, New York, pp. 274-280: P.A. Seeger: "A fast parallel encoding scheme for anger camera to determine the position of an event in two steps: First, the photomultiplier with the largest signal is identified, giving the course position. Then linear combinations of said signal and its neighbours are used to interpolate within said receptive field. The number of neighbours used for interpolation is invariant as well as a waiting scheme used for calculating the position of the event."

DE-A1-33 17 292 discloses a scintillation camera, wherein all measured photo tube outputs are weighted with a factor representing a probability whether an event calculated to exist at a particular location actually exists there.

While all these techniques are useful, all suffer from certain limitations. One such limitation is that all such techniques are less useful at or near the edge of the crystal than in the center of the crystal. The peripheral surface of the crystal reflects light to the PMTs and this reflected light distorts the conventional centroid determinations. As a result, events at or near the edge of the crystal are not located as accurately as are identical events at the center of the crystal.

Additionally, it is generally accepted that future scintillation camera detectors will use digital technology and not the analog technology which is presently in use. When this occurs, it will be desirable to utilize the detailed information available from each individual PMT.

One object of the invention is to provide methods and apparatus for linearity correction which will permit all known types of correction techniques to be incorporated into a single comprehensive scheme.

Another object is to provide such methods and apparatus which are suitable for use with digital, as opposed to analog, signals.

Yet another object is to provide such methods and apparatus which can be advantageously used in the edge domain of the scintillator.

Still a further object is, in general, to improve on known methods and apparatus of this general type.

The invention proceeds from the realization that no single position calculation scheme with fixed weighting of PMT outputs can apply equally well to all pixels in the field of view of a scintillation camera. This is because the PMTs are rather large when compared with the light distribution pattern within the scintillator. This leads to a dependance of camera response (resolution, uncorrected positional accuracy) on the location of a scintillation event. For example, for pixels at or near the center of the field of view of an individual PMT, the camera is relatively insensitive; small changes in location of a scintillation event produce only small changes in the outputs of that PMT and those PMTs which immediately surround it. However, for pixels between PMTs the camera is highly sensitive; small changes in the location of a scintillation event produce large changes in PMT outputs. Near the edges of the crystal, the scintillation light pattern is not even symmetric and fixed-weight schemes break down. Thus, the location of a scintillation event determines the correction scheme which is necessary.

The invention further proceeds from the realization that an all-digital scintillation camera will produce information which is qualitatively different from that produced by the conventional analog Anger technology. In an Anger-type camera, it is impossible to isolate the output of any particular one of the PMTs. This is because all PMT outputs are summed after thresholding and signal processing takes place on the summed signal. In an all-digital scintillation camera the output of each individual PMT can be considered separately from the outputs of all the other ones. It is consequently possible to identify, within the field of view of the camera, a neighborhood in which a detected scintillation event has taken place, rather than to calculate a location of the event on the basis of a priori assumptions. Consequently, a digital camera will permit direct determination of the neighborhood within which a scintillation event has taken place, and consequently will permit use of a localized linearity correction algorithm (utilizing detailed knowledge of PMT responses) to more specifically locate the event within the identified neighborhood.

In accordance with the invention, linearity correction is carried out using three steps. In the first step, the location of a scintillation event is approximated. In the second step, particular PMTs and weighting factors are identified as a function of the approximation. In the third step, the location of the scintillation event is calculated using only the outputs of the identified PMTs and the identified weighting factors.

In further accordance with a preferred embodiment of the invention, these three steps may be iterated. Where a particular event is located in the edge domain of the camera, it is possible to use the calculated location of a scintillation event as a basis for identifying particular PMTs and weighting factors, and to use a subsequent calculation step to refine an already-calculated event location.

Advantageously, the identification step is carried out using lookup tables. This is fast and does not require excessive quantities of memory.

### BRIEF DESCRIPTION OF THE DRAWINGS

Exemplary and non-limiting preferred embodiments of the invention are shown in the drawings, in which:
Fig. 1 is a schematic illustration of a preferred embodiment of the invention;
Figs. 2, 3 and 4 schematically illustrate the effect of location on the positioning algorithm utilized;
Fig. 5 is a flowchart illustrating a preferred embodiment of the invention; and
Fig. 6 is a schematic illustration of the implementation of the lookup tables in the preferred embodiment.

### DETAILED DESCRIPTION OF PREFERRED EMBODIMENTS

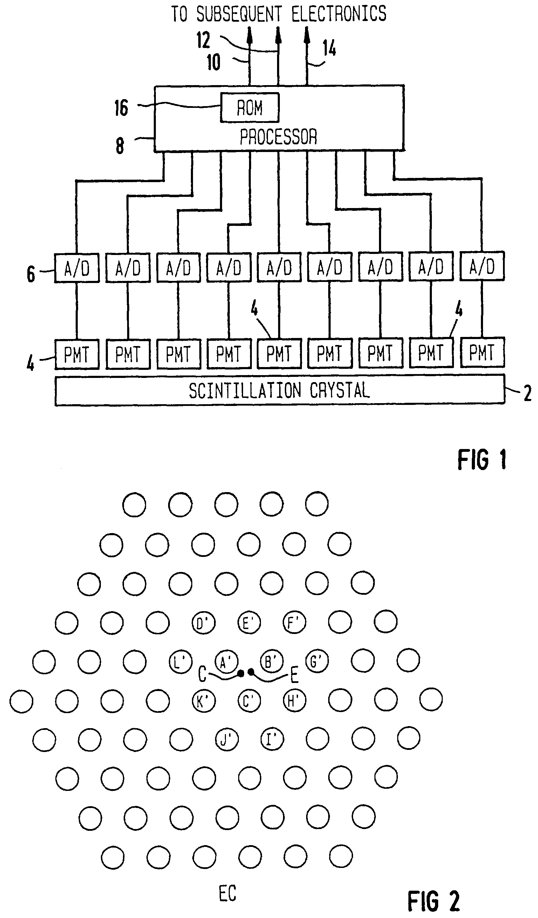

Referring first to Fig. 1, a scintillation crystal 2 of, e.g. NaI(Tl) is placed in optically communicative relationship with a plurality of PMTs 4. Each of the PMTs produces an analog output signal which is digitized by a D/A converter 6. The outputs from the D/A converter 6 are all routed to a processor 8; the processor 8 produces signals along lines 10, 12 and 14 which represent, respectively, the X coordinate, Y coordinate and energy of a scintillation event detected in the crystal 2. (The description below will concentrate on the manner in which the X and Y coordinates are determined.) The signals so produced are utilized by subsequent circuitry and data processing equipment to produce planar or tomographic images of a region of interest in a patient (not shown) undergoing a nuclear medicine study.

The sizes and numbers of the various elements shown in Fig. 1 have been distorted for clarity and many necessary elements have been eliminated therefrom. Thus, an actual scintillation camera has a two-dimensional array of PMTs 4 and many more PMTs 4 are present. Furthermore, the scintillation crystal 2 is much thinner than the dimensions in Fig. 1 would imply, and the crystal 2 is enclosed within a hermetically sealed container (not shown). Fig. 1 is merely illustrative and the absence of any particular element is not to be taken as an indication that the element is absent from a camera manufactured in accordance with the preferred embodiment of the invention.

Initially, for each event E detected by the PMTs 4, the processor 8 approximates the location of the event. This approximation step may be carried out using conventional centroid arithmetic and digital thresholding, but this is not required. Regardless of the techniques used in the approximation step, the result of the approximation is to define a neighborhood which includes the location of the event E. The neighborhood may conveniently be identified by a characteristic point C since the shape and size of the neighborhood varies as a function of the location of the characteristic point C.

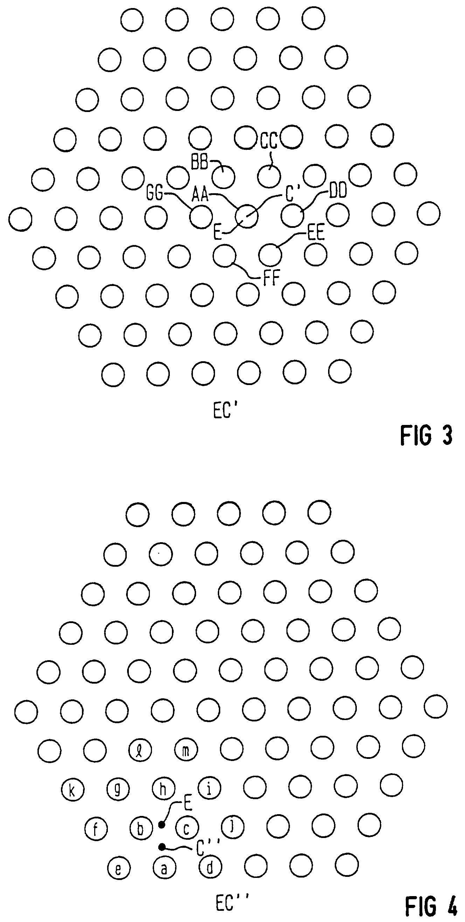

The use of the term "approximation" does not imply that the event is located less accurately than in conventional Anger-type cameras and indeed does not imply that there is any difference between the finalized location and the location as approximated. The approximation is as coarse or as fine as necessary given the manner in which subsequent calculation(s) are implemented. Thus, in Fig. 2, where the event E takes place in the gap between PMTs 4 in the center domain of the camera, the neighborhood might be relatively small. Where (Fig. 3) the event E takes place directly at the center of the field of view of a central PMT 4, the neighborhood can be larger. Where (Fig. 4) the event E takes place in the edge domain of the field of view, the neighborhood may be comparatively large. (The neighborhood is not shown by itself since it can be of arbitrary shape and of varying area. Only the characteristic point C, C', C" is shown in each case.)

Figs. 2, 3 and 4 are distorted for clarity. In an actual scintillation camera, the PMTs 4 are much closer together.

The processor 8 contains a lookup table which advantageously is implemented as a ROM 16. When an approximate location of a scintillation event is input to the ROM 16, the ROM 16 outputs a list of PMTs whose outputs ought to be taken into consideration when determining the location of events which are located somewhere within the neighborhood. Additionally, the ROM 16 also outputs a list of weights which the outputs of the PMTs ought to have in this determination.

Thus, in the Fig. 2 case, the ROM 16 might, in response to characteristic point C, output a list which includes twelve PMTs 4, namely PMTs labelled A' through L'. For each PMT A' through L', the ROM 16 would also output X and Y weights which ought to be accorded to the output of the corresponding PMT. In the Fig. 3 instance, the ROM 16 might, in response to characteristic point C', output a list which includes seven PMTs 4, namely PMTs labelled AA through GG. For each PMT AA through GG, the ROM 16 would also output X and Y weights; these weights would differ from those in the Fig. 2 case. For the Fig. 4 example, the ROM 16 might, in response to characteristic point C", output a list which includes thirteen PMTs 4, namely PMTs labelled a through m, together with corresponding X and Y weights.

With this information and these weights, a more exact calculation of the location of the event E can be performed. Thus, in the Fig. 2 case, a subsequent calculation step can be carried out only by considering the weighted outputs of PMTs A' through L'. In the Fig. 3 case, the subsequent calculation would be carried out using the weighted outputs of PMTs AA through GG.

In the Fig. 4 instance, a calculation might initially be carried out on the basis of the outputs from PMTs a through m. However, it is known that edge reflections complicate the determination of locations of events which occur in the edge domain of the field of view. Thus, in the Fig. 4 instance, it might be necessary to iterate the computation process, so that the calculated location as determined by weighting the outputs of the 13 tubes a through m might be used to address the ROM 16 again. This might produce a list containing only eight tubes: PMTs a through h, together with associated weighting factors. The final location would then be calculated on the basis of the weighted tubes a through h.

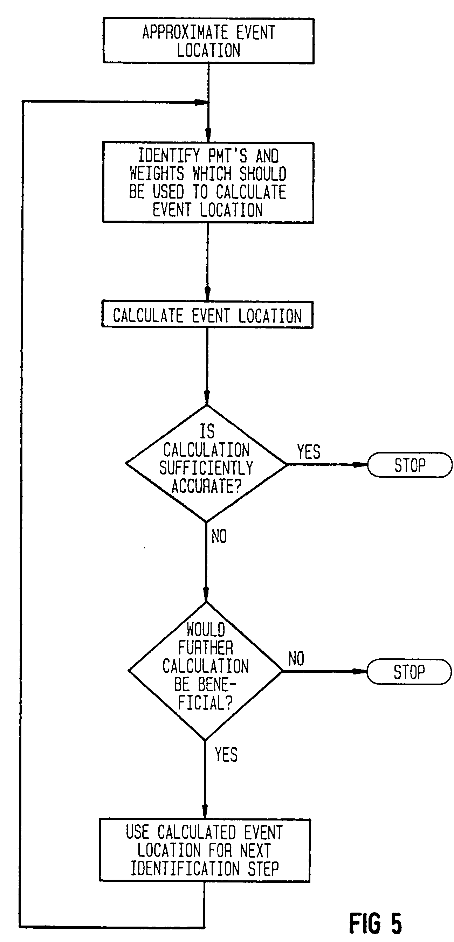

A flow chart illustrating the operation of the preferred embodiment is shown in Fig. 5. Initially, the location of a scintillation event is approximated. Then, the PMTs whose outputs ought to be considered for events at the approximated location are identified, together with weights which ought to be assigned to such outputs. Next, the location of the event is calculated based upon the outputs of the identified PMTs as appropriately weighted. It should be noted that the identified PMTs need not each contribute to a calculation of the X and the Y coordinates of the event. Some may contribute to the X coordinate or the Y coordinate alone.

If the results of the calculation are sufficiently accurate, the calculated location is taken as the location of the event. If not, the results of the calculation are used in a subsequent iteration of the identification and calculation steps. This process is repeated as required or until no further advantage is obtained by further iterations, at which time the process is terminated.

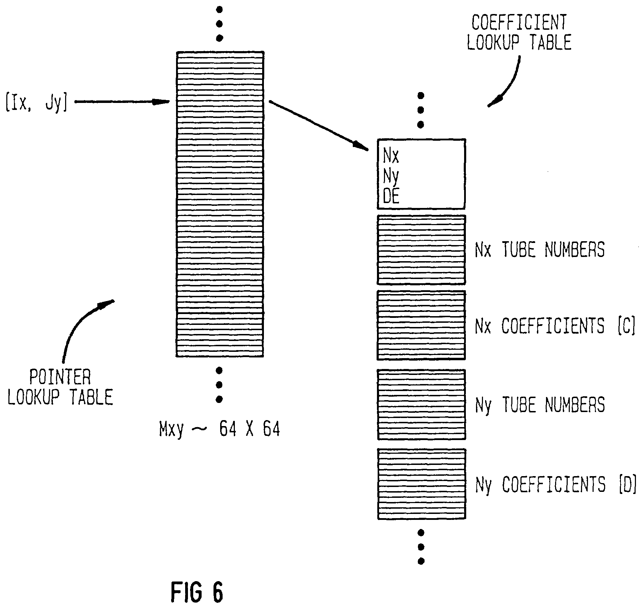

Advantageously, the ROM 16 is implemented as a plurality of linked lookup tables, as is shown in Fig. 6. The characteristic point C as initially approximated is input to a "pointer" lookup table which identifies lookup tables for the PMTs involved, e.g. A' - L' etc. These latter lookup tables contain X and Y weighting coefficients.

In the examples given above, it is assumed that the calculation step is carried out linearly. This need not be so. Calculation may proceed on the basis of nonlinear equations rather than linear ones. The invention does not reside in the particular calculation scheme which is utilized.

To program the ROM 16, dot or line patterns, or both, are presented to the detector and appropriate PMTs and weighting coefficients are derived empirically.

Energy correction can be carried out in any suitable way. It is presently believed that conventional energy correction techniques as disclosed in U.S. Patent No. 4,323,977 produce sufficiently linear energy correction, but the particular energy correction scheme utilized is not a part of the invention.

Those skilled in the art will understand that changes can be made in the preferred embodiments here described, and that these embodiments can be used for other purposes. Such changes and uses are within the scope of the invention, which is limited only by the claims which follow.

## Claims

1. A detector for use in scintillation cameras, comprising:
a scintillator (2);
a plurality of photodetectors (4) in optically communicative relationship with the scintillator (2) and producing electrical outputs representative of scintillation events which take place therein;
means (8) for approximating, from said electrical outputs of said photodetectors (4) relating to a single scintillation event, the physical location of said event with respect to the scintillator (2);
means (8) for identifying, from said approximation, the proper number and identities of photodetector outputs which should be taken into account to determine said physical location and the weights which should be assigned to said outputs in such determination, and wherein the number, the identity and the weight of photodetector outputs depend on the approximated physical location;
means (8) for calculating, from said approximation and said identification, the physical location of said event with respect to the scintillator (2).

2. The detector of claim 1, wherein said identifying means comprises a look-up table (16).

3. A scintillation camera comprising a detector according to claim 1, means (8) for determining the energy of said event, and means for creating images from a plurality of said events.

4. A method of approximating, to a desired degree of accuracy, the location of a scintillation event in a scintillation crystal (2) to which are coupled, in an operative relationship, a plurality of photodetectors (4), comprising the following steps:
approximating from the electrical outputs of said photodetectors the location of a scintillation event in the scintillation crystal (2);
selecting, from said approximation, a proper number and identity for a subset of photodetectors (4) and a set of weighting factors which apply to said subset, wherein said number, said identity and said weighting factors depend on the approximated physical location.
calculating, from outputs of said subset and in accordance with said set of weighting factors, a location of a scintillation event;
determining whether said calculated location is calculated to said desired degree of accuracy;
if said calculated location is not calculated to said desired degree of accuracy, repeating at least once, said selecting step based on said calculated location and said calculating step based on the repeated selecting step.

## Patentansprüche

1. Detektor zur Verwendung in einer Szintillationskamera, umfassend:
- einen Szintillator (2),
- eine Mehrzahl von Photodetektoren (4), die optisch mit dem Szintillator (2) in Verbindung stehen und elektrische Ausgangssignale erzeugen, die Szintillationsereignisse repräsentieren, die darin stattfinden,
- Mittel (8) zur Annäherung des physikalischen Orts dieses Ereignisses in Bezug auf den Szintillator (2) aus den elektrischen Ausgangssignalen der Photodetektoren (4) bezüglich eines einzelnen Szintillationsereignisses,
- Mittel (8), um aus diesen Annäherungen die geeignete Zahl und Identität von Photodetektorausgangssignalen zu identifizieren, die in Betracht gezogen werden sollten zur Bestimmung des physikalischen Ortes und die Gewichtung, die diesen Ausgängen bei dieser Bestimmung zugewiesen werden sollte, und wobei die Zahl, die Identität und die Gewichtung der Photodetektor-Ausgangssignale von dem angenäherten physikalischen Ort abhängen,
- Mittel (8) zur Berechnung des physikalischen Ortes des Ereignisses in Bezug auf den Szintillator (2) aus dieser Annäherung und dieser Identifizierung.

2. Detektor nach Anspruch 1, wobei die Identifiziermittel eine Look-up-Tabelle (16) umfassen.

3. Szintillationskamera, umfassend einen Detektor nach Anspruch 1, Mittel (8) zur Bestimmung der Energie des Ereignisses und Mittel zur Erzeugung von Bildern aus einer Mehrzahl solcher Ereignisse.

4. Verfahren zur Annäherung des Ortes eines Szintillationsereignisses mit einer gewünschten Genauigkeit, wobei das Szintillationsereignis in einem Szintillationskristall (2) auftritt, mit dem eine Mehrzahl von Photodetektoren (4) funktionsmäßig gekoppelt ist, mit folgenden Schritten:
- Annäherung des Ortes eines Szintillationsereignisses im Szintillationskristall (2) aus den elektrischen Ausgangssignalen der Photodetektoren,
- Auswahl einer geeigneten Anzahl und Identität für eine Untermenge von Photodetektoren (4) und eines Satzes von Wichtungsfaktoren, die auf diese Untermenge anwendbar sind, aus der Annäherung, wobei die Anzahl, die Identität und die Gewichtungsfaktoren vom angenäherten physikalischen Ort abhängen,
- Berechnung des Ortes eines Szintillationsereignisses aus den Ausgangssignalen der Untermenge und entsprechend dem Satz von Gewichtungsfaktoren,
- Bestimmung, ob der berechnete Ort mit der gewünschten Genauigkeit berechnet wurde,
- wenn der berechnete Ort nicht mit der gewünschten Genauigkeit berechnet wurde, wenigstens eine Wiederholung des Auswahlschrittes basierend auf dem berechneten Ort und mit dem Berechnungsschritt basierend auf dem wiederholten Auswahlschritt.

## Revendications

1. Détecteur destiné à être utilisé dans des caméras à scintillation, comprenant:
un scintillateur (2);
un ensemble de photodétecteurs (4) en communication optique avec le scintillateur (2) et produisant des sorties électriques représentatives d'événements de scintillation qui s'y produisent;
des moyens (8) pour fournir une approximation, à partir des sorties électriques des photodétecteurs (4) concernant un événement de scintillation unique, de la position physique de l'événement en question par rapport au scintillateur (2);
des moyens (8) pour identifier, à partir de cette approximation, le nombre et les identités propres des sorties des photodétecteurs qui doivent être prises en compte pour déterminer l'emplacement physique et les poids devant être affectés aux sorties lors de cette détermination, et dans lequel le nombre, l'identité et le poids des sorties des photodétecteurs dépendent de la position physique approchée;
des moyens (8) pour calculer, à partir de l'approximation et de l'identification, la position physique de l'événement en question par rapport au scintillateur (2).

2. Détecteur selon la revendication 1, dans lequel les moyens d'identification comprennent une table de consultation (16).

3. Caméra à scintillation comprenant un détecteur selon la revendication 1, des moyens (8) pour déterminer l'énergie de l'événement, et des moyens pour créer des images à partir d'un ensemble de ces événements.

4. Procédé pour établir une approximation, à un degré de précision souhaité, de la position d'un événement de scintillation dans un cristal à scintillation (2) auquel sont reliés de façon fonctionnelle un ensemble de photoconducteurs (4), comprenant les étapes suivantes:
l'approximation à partir des sorties électriques des photodétecteurs, de la position d'un événement de scintillation dans le cristal à scintillation (2);
la sélection à partir de cette approximation, d'un nombre et d'une identité propres pour un sous-ensemble de photodétecteurs (4) et un ensemble de facteurs de pondération qui s'appliquent à ce sous-ensemble, le nombre, l'identité et les facteurs de pondération dépendant de la position physique approchée;
le calcul, à partir des sorties du sous-ensemble et en fonction de l'ensemble de facteurs de pondération, d'une position d'un événement de scintillation;
la détermination du fait que l'emplacement calculé l'a été avec le degré souhaité de précision;
si la position calculée ne l'a pas été avec le degré souhaité de précision, la répétition au moins une fois de l'étape de sélection en se fondant sur la position calculée et de l'étape de calcul en se fondant sur l'étape de sélection répétée.
